Europäisches Patentamt

European Patent Office

Office européen des brevets

(19)

(11) **EP 0 533 036 B1**

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.6: **F41G 7/22**, G01S 3/789

(21) Anmeldenummer: **92115380.5**

(22) Anmeldetag: **09.09.1992**

(54) **Suchkopf**

Seeker

Tête chercheuse

(84) Benannte Vertragsstaaten:
**DE FR GB IT**

(30) Priorität: **20.09.1991 DE 4131429**

(43) Veröffentlichungstag der Anmeldung:
**24.03.1993 Patentblatt 1993/12**

(73) Patentinhaber: **Bodenseewerk Gerätetechnik GmbH**
**D-88662 Überlingen (DE)**

(72) Erfinder: **Uwira, Bernd, Dr.**
**W-7750 Konstanz (DE)**

(74) Vertreter: **Weisse, Jürgen, Dipl.-Phys.**
**Patentanwalt et al**
**Fuggerstrasse 26**
**D-10777 Berlin (DE)**

(56) Entgegenhaltungen:
**EP-A- 0 120 329      EP-A- 0 233 080**

**Beschreibung**

Die Erfindung betrifft einen Suchkopf mit einem strukturfest angeordneten, bilderfassenden Sensor, einem strukturfesten abbildenden optischen System zur Abbildung eines begrenzten Gesichtsfeldes auf dem bilderfassenden Sensor und einer Spiegelanordnung mit beweglichen Spiegeln zur definierten Ablenkung des Strahlenganges des abbildenden optischen Systems.

Solche Suchköpfe werden beispielsweise benutzt bei zielsuchenden Flugkörpern. Der bilderfassende Sensor ist dabei üblicherweise eine zweidimensionale Anordnung von Detektorelementen. Das Bild eines Gesichtsfeldes wird durch das abbildende optische System auf dem bilderfassenden Sensor abgebildet. Aus dem dabei erhaltenen Bildraster können Informationen über Art und Ort eines erfaßten Zieles gewonnen werden. Aus solchen Informationen werden Lenksignale für den Flugkörper abgeleitet.

Bei solchen bildverarbeitenden Sensoren tritt das Problem auf, daß der Sensor selbst nur ein begrenztes Gesichtsfeld zu erfassen gestattet. Zum Auffassen eines Objektes in einem größeren Gesichtsfeld ist es daher erforderlich, das größere Gesichtsfeld abzutasten oder den Sensor auf das Objekt optisch auszurichten. Dabei muß die Objektposition in dem Gesichtsfeld möglichst genau bestimmbar sein.

Es ist bekannt, ein Abbildungssystem eines Sensors durch eine Mechanische Schwenkvorrichtung zu schwenken. Zu diesem Zweck wird üblicherweise das Abbildungssystem und ggf. der Sensor mittels eines zweiachsigen Rahmensystems (Nick- und Gier-Rahmen oder Roll- und Nick-Rahmen) allseitig beweglich in der Struktur gelagert. Eine solche bewegliche, mechanische Lagerung ist jedoch aus verschiedenen Gründen nachteilig: Der Aufbau ist relativ komplex. Die Lagerung hat ein großes Gewicht und große Trägheitsmomente. Das Rahmensystem erfordert ein großes Volumen. Das gilt auch deshalb, weil das gesamte Abbildungssystem mit geschwenkt werden muß. Die Signale müssen durch die Rahmenachsen von den beweglichen Teilen zur Struktur übertragen werden. Das erfordert hohen technischen Aufwand. Die Elektronik und die Stellglieder für die Positionierung des Rahmensystems erfordern hohe Leistung. Das gilt insbesondere, wenn das Abbildungssystem schnell positioniert werden soll. Die Positionierung muß sehr genau erfolgen. Daher sind aufwendige Abgriffe an den Rahmenachsen erforderlich. Bei einer Genauigkeitsforderung von 0,1 mrad ist etwa eine Auflösung eines digitalen Abgriffs von 18 Bit bezogen auf den Vollkreis erforderlich.

Die DE-A-3 310 875 zeigt ein Strahlablenksystem bekannt, mit dem die Abtastung einer Fläche längs einer Rosettenbahn erfolgt. Dieses Strahlenablenksystem weist zwei Motoren auf, auf deren Wellen Spiegel unter jeweils einem Winkel zur Motorachse angebracht sind. Der Strahlengang läuft über die beiden Spiegel. Die Spiegel werden von den zwei Motoren kontinuierlich angetrieben. Das Drehzahlverhältnis der beiden Motoren ist gleich dem Verhältnis zweier teilerfremder ganzer Zahlen. Das Strahlenablenksystem wirkt als Empfänger mit einem einzigen Detektorelement zusammen, das zu jedem Zeitpunkt nur einen Punkt des Gesichtsfeldes erfaßt. Das Strahlenablenksystem mit diesem einen Detektorelement entspricht somit in seiner Funktion dem vorstehend erwähnten bilderfassenden Detektor.

Die DE-A-3 310 875 beschreibt eine Ausführung, bei welcher mit Hilfe des Strahlenablenksystems ein strahlendes Objekt verfolgt werden soll. Zu diesem Zweck ist das Strahlenablenksystem auf einer räumlich verschwenkbaren, durch gesonderte Motoren antreibbaren Anordnung gelagert. Nach Maßgabe der Lage des strahlenden Objekts im abgetasteten Gesichtsfeld des Strahlenablenksystems werden diese gesonderten Motoren angesteuert und suchen das Objekt ständig in der Mitte dieses abgetasteten Gesichtsfeldes zu halten.

Diese Anordnung sieht somit auch eine mechanische Ausrichtung des optischen Systems auf das Ziel vor, wobei das "Strahlenablenksystem" einen Teil dieses ausgerichteten optischen Systems bildet. Damit ergeben sich auch hier die schon oben geschilderten Probleme und Nachteile.

Zur Vermeidung dieser Nachteile ist es bekannt, den Sensor und die zugehörige Abbildungsoptik strukturfest anzuordnen und den Strahlengang über schwenkbare Planspiegel zu leiten, die in einem zweiachsigen Rahmensystem gelagert sind. Damit kann der Strahlengang in die gewünschte Richtung des Gesichtsfeldes gelenkt werden. Da sich jedoch durch die Reflexion Winkelfehler des Spiegels verdoppeln, steigt bei einem solchen System auch die Genauigkeitsanforderung an den Abgriff um den Faktor zwei an. Für eine Genauigkeit von 0,1 mrad ist eine Auflösung von 19 Bit bezogen auf den Vollkreis erforderlich. Solche Abgriffe sind sehr aufwendig.

Es ist weiter bekannt, die Strahlablenkung durch zwei hintereinander im Strahlengang angeordnete und gegeneinander verdrehbare optische Keile zu bewirken. Bei einer solchen Anordnung sind die Anforderungen an die Genauigkeit der Abgriffe geringer. Bei einem Ablenkwinkel von 30° ist die Anforderung an die Genauigkeit der Abgriffe etwa um einen Faktor zehn geringer als bei einem optischen System mit einem Spiegel, der in einem Rahmensystem schwenkbar ist. Nachteilig ist hierbei jedoch, daß die optischen Eigenschaften der Keile, insbesondere der Brechungsindex, von der Wellenlänge und von der Temperatur abhängig sind. Damit würde auch der Ablenkwinkel von der Wellenlänge und von der Temperatur abhängig. Das begrenzt den nutzbaren Wellenlängenbereich und erfordert zusätzlichen Korrekturaufwand für die Korrektur der Temperaturabhängigkeit.

Der Erfindung liegt die Aufgabe zugrunde, einen Suchkopf der eingangs genannten Art leicht und raumsparend auszubilden, seine Leistungsaufnahme gering zu halten, die Anforderungen an die Genauigkeit der Abgriffe zu vermindern und eine Wellenlänge- und Temperaturabhängigkeit der Ablenkung des Strahlenganges zu vermeiden.

Erfindungsgemäß wird diese Aufgabe dadurch gelöst, daß

(a) die Spiegelanordnung zwei Spiegel aufweist, die durch Stellmotoren um je eine Drehachse drehbar sind, welche mit der Normalen der Spiegel einen Winkel einschließt,

(b) der Strahlengang über beide Spiegel geleitet ist und

(c) die Stellmotore von Nachführsignalen, die aus Signalen des bilderfassenden Sensors abgeleitet sind, im Sinne einer Ausrichtung des Strahlenganges auf ein Ziel ansteuerbar sind.

Der Strahlengang wird in dem größeren Gesichtsfeld über Spiegel abgelenkt und positioniert. Es ist daher nicht erforderlich, (wie auch bei der DE-A-3 310 875) das gesamte Abbildungssystem und ggf. den Detektor kardanisch zu lagern und über die Rahmenachsen zu verstellen. Die Spiegel sind ebenfalls nicht kardanisch gelagert. Damit können die beim Stand der Technik auftretenden erhöhten Anforderungen an die Genauigkeit der Abgriffe entfallen. Vielmehr erfolgt die Verdrehung der spiegelnden Flächen jeweils um eine Drehachse, die mit der Normalen der spiegelnden Flächen einen relativ kleinen Winkel einschließt. Einer Verdrehung der spiegelnden Flächen über einen Vollkreis entspricht nur ein relativ dazu kleiner Ablenkwinkel. Im Verhältnis des maximalen Ablenkwinkels zu dem Vollkreis wirken sich auch Fehler bei der Messung des Drehwinkels um die Drehachse auf die Genauigkeit in der Bestimmung des Ablenkwinkels aus.

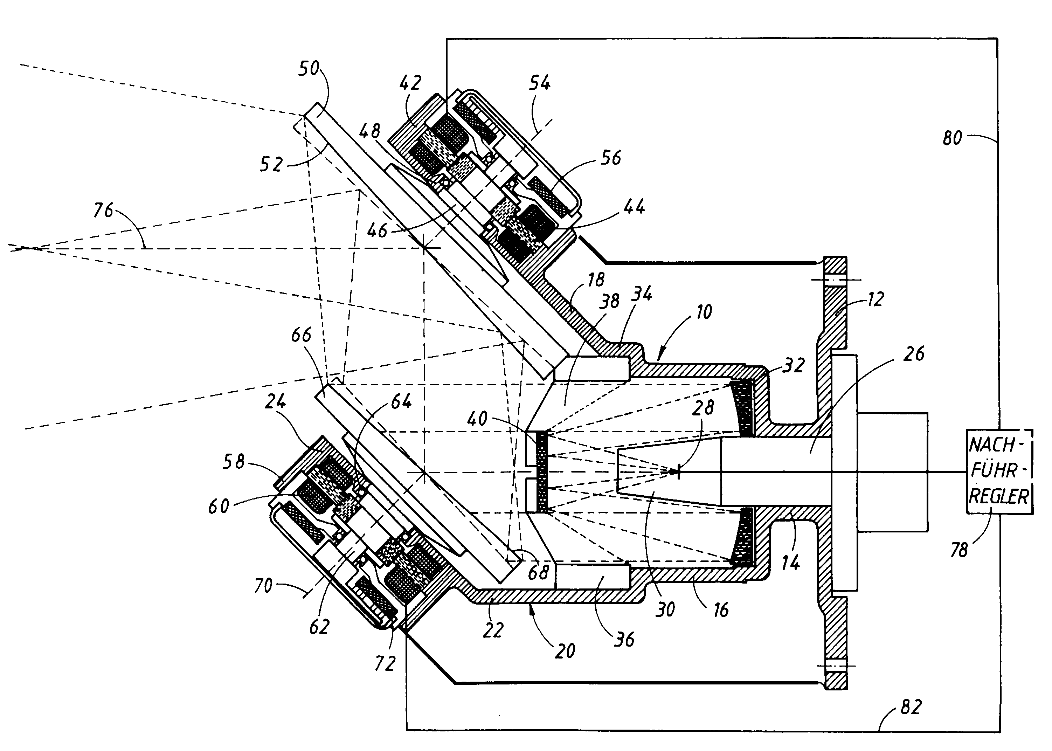

Ein Ausführungsbeispiel der Erfindung ist nachstehend unter Bezugnahme auf die zugehörige Zeichnung näher erläutert. Die Zeichnung ist eine schematische Darstellung eines Suchers mit einem bilderfassenden Sensor und einem Strahlablenksystem mit zwei verdrehbaren Spiegeln.

In der Zeichnung ist mit 10 eine Struktur bezeichnet, an welcher der Sucher angebracht ist. Die Struktur 10 weist einen Flansch 12 mit einem Hals 14 auf. An den Hals 14 schließt sich ein topfförmiger, erweiterter Teil 16 an. Am Rand des erweiterten Teils 16 sitzt auf einer Seite ein Arm 18. Auf der dazu diametral gegenüberliegenden Seite sitzt an dem Teil 16 ein Arm 20. Der Arm 20 bildet einen sich axial zu dem topfförmigen Teil erstreckenden ersten Abschnitt 22 und einen sich daran anschließenden, abgewinkelten, zweiten Abschnitt 24. Der zweite Abschnitt erstreckt sich parallel zu dem Arm 18.

In dem Hals 14 sitzt ein Bildsensorteil 26 mit einem hochauflösenden, bilderfassenden und -verarbeitenden Sensor 28. Der Sensor 28 ist von einer kegelstumpfförmigen Abschirmung 30 umgeben. Auf dem Boden des Teils 16 sitzt ein ringförmiger Hohlspiegel 32. Der Hohlspiegel 32 umgibt den Bildsensorteil 26. Weiterhin sitzt in einem nach außen hin sich nochmals erweiternden Randteil 34 des erweiterten Teils 16 ein Ring 36. Der Ring 36 trägt mit Stegen 38 einen Planspiegel 40. Der Hohlspiegel 32 und der Planspiegel bilden ein strukturfestes Abbildungssystem.

Der Arm 18 bildet eine Aufnahme 42 für einen Stellmotor 44. Eine Welle des Stellmotors 44 ragt durch einen Durchbruch 48 des Armes 18 und ist in diesem gelagert. An der Welle ist ein Spiegel 50 mit einer spiegelnden Fläche 52 angebracht. Die spiegelnde Fläche 52 ist auf der Vorderseite des Spiegels 50 vorgesehen. Der Spiegel 50 ist dabei so ausgebildet, daß die Normale der spiegelnden Fläche 52 mit der Drehachse 54 des Stellmotors 44 einen Winkel bildet. Die spiegelnde Fläche 52 führt daher beim Umlauf des Stellmotors 44 eine Taumelbewegung aus. An dem Stellmotor 44 ist ein Drehgeber 56 angebracht, der die Winkelstellung des Stellmotors 44 liefert. Der Drehgeber ist ein analoger Drehgeber in Form eines Potentiometers.

In entsprechender Weise bildet der Abschnitt 24 des Armes 20 eine Aufnahme 58 für einen Stellmotor 60. Eine Welle 62 des Stellmotors 60 ragt durch einen Durchbruch 64 des Armes 20 und ist in diesem gelagert. An der Welle 62 ist ein Spiegel 66 mit einer spiegelnden Fläche 68 angebracht. Die spiegelnde Fläche 68 ist auf der Vorderseite des Spiegels 66 vorgesehen. Der Spiegel 66 ist dabei so ausgebildet, daß die Normale der spiegelnden Fläche 68 mit der Drehachse 70 des Stellmotors 60 einen Winkel bildet. Die spiegelnde Fläche 68 führt daher beim Umlauf des Stellmotors 60 ebenfalls eine Taumelbewegung aus. An dem Stellmotor 60 ist ein Drehgeber 72 in Form eines Potentiometers angebracht, der die Winkelstellung des Stellmotors 60 liefert.

Die Drehachsen 54 und 70 sind zueinander parallel. Bei der dargestellten Ausführung bilden die Drehachsen 54 und 70 mit der optischen Achse des strukturfesten Abbildungssystems 32,40 Winkel von 45°.

Der Strahlengang läuft über die spiegelnde Fläche 52, die spiegelnde Fläche 68, den Hohlspiegel 32 und den Planspiegel 40 zum bilderfassenden Sensor 28. Je nach der Winkellage der taumelnden, spiegelnden Flächen 52 und 68 kann der Strahlengang dabei z.B. den eng gestrichelten oder den weit gestrichelten Strahlen in der Zeichnung entsprechen. Wenn die spiegelnden Flächen 52 und 68 zueinander "gekreuzt" angeordnet sind, dann erfolgt keine winkelmäßige Ablenkung des Strahlenganges. Das ist in der Zeichnung durch den Zentalstrahl 76 angedeutet. Durch geeignete Kombination von Spiegelstellungen kann jede Richtung des Strahlenganges innerhalb des Kegels erhalten werden, der in der Papierebene der Figur durch die weit und eng gestrichelt dargestellten Strahlen begrenzt ist.

Die Ausgangssignale des Sensors 28 liefern nach Bildverarbeitung in bekannter Weise Nachführsignale, durch welche der Strahlengang beispielsweise einem im Gesichtsfeld des Sensors 28 erfaßten Ziel nachgeführt wird. Das ist in der Figur schematisch dargestellt: Der Sensor liefert Ausgangssignale auf einen Nachführ-Regler 78. Der Nachführ-Regler steuert über Steuerleitungen 80 und 82 die Stellmotoren 44 und 60 an. Die Stellmotoren halten das Ziel in der Mitte des von dem bilderfassenden Sensor 28 über die Spiegel 50 und 66 beobachteten engeren Gesichtsfeldes.

Aus den Signalen der Drehgeber 56 und 72 kann die genaue Position des Strahlenganges bestimmt werden. Dabei ist die Position des Strahlenganges sehr genau, auch wenn relativ ungenaue Drehgeber 56 und 72 in Form von Potentiometern verwendet werden. Bei der beschriebenen linearen Ablenkung ist der Winkelfehler $\Delta\varphi$ in der Elevation

$$\Delta\varphi = \frac{\pi}{360°} \cdot FOR \cdot \Delta\alpha$$

wobei FOR (field of regard) der Abtastbereich und $\Delta\alpha$ die genauigkeit der Spiegelantriebe ist. Für einen Abtastbereich FOR = 30° wird die Genauigkeit der Positionierung

$$\Delta\varphi = 0{,}25 \cdot \Delta\alpha$$

Die erreichbare Genauigkeit ist in diesem Beispiel im Vergleich zu einem System mit einem um Nick- und Gier-Achse beweglichen Spiegel um einen Faktor acht höher. Um eine Genauigkeit von 0,1 mrad zu erreichen, genügen als Drehgeber 56 oder 72 Potentiometer mit einer Genauigkeit von 0,02°. Für ein System mit einem um Nick- und Gier-Achse beweglichen Spiegel müßten bereits hochwertige und teure optische Abgriffe eingesetzt werden.

## Patentansprüche

1. Suchkopf mit einem strukturfest angeordneten, bilderfassenden Sensor (28), einem strukturfesten, abbildenden optischen System (32,40) zur Abbildung eines begrenzten Gesichtsfeldes auf dem bilderfassenden Sensor (28) und einer Spiegelanordnung mit beweglichen Spiegeln (50,66) zur definierten Ablenkung des Strahlenganges des abbildenden optischen Systems, **dadurch gekennzeichnet, daß**

(a) die Spiegelanordnung zwei Spiegel (50,66) aufweist, die durch Stellmotoren (44,60) um je eine Drehachse (54,70) drehbar sind, welche mit der Normalen der Spiegel (50,66) einen Winkel einschließt,

(b) der Strahlengang über beide Spiegel (50,66) geleitet ist und

(c) die Stellmotore (44,60) von Nachführsignalen, die aus Signalen des bilderfassenden Sensors (28) abgeleitet sind, im Sinne einer Ausrichtung des Strahlenganges auf ein Ziel ansteuerbar sind.

## Claims

1. Seeker head containing an image detecting sensor (28) which is structurally fixedly arranged, a structurally fixedly arranged imaging optical system (32,40) for imaging a limited field of view at the image detecting sensor (28), and a mirror arrangement including movable mirrors (50,66) for deflecting the path of rays of the imaging optical system in a defined manner, **characterised in that**

(a) the mirror arrangement comprises two mirrors (50,66) which are rotatable about respective rotational axes (54,70) by means of respective servo motors (44,60), said rotational axes enclosing an angle with the normal of the respective mirrors (50,66),

(b) the path of rays is conducted via both of the two mirrors (50,66) and

(c) the servo motors (44,60) are controlled by means of tracking signals which are derived from signals generated by the image detecting sensor (28), in a manner such that the path of rays is directed to a target.

## Revendications

1. Tête chercheuse munie d'un capteur (28), saisissant des images et disposé fixement par rapport à la structure, d'un système optique (32,40) reproducteur fixe par rapport à la structure destiné à reproduire un champ de vision limité sur le capteur (28) saisissant des images, et d'une disposition de miroirs munie de miroirs (50,66) mobiles destinée à dévier de façon définie la marche des rayons du système optique reproducteur, **caractérisée par le fait que**

(a) la disposition de miroirs présente deux miroirs (50,66) qui sont susceptibles de tourner par des servomoteurs (44,60) autour de chaque fois un axe de rotation (54,70) qui inclut un angle avec la normale des miroirs (50,66),
(b) la marche des rayons est menée par l'intermédiaire de deux miroirs (50,66) et
(c) les servomoteurs (44,60) sont susceptibles d'être commandés par des signaux de poursuite, déduits de signaux du capteur (28) saisissant des images, en vue d'un alignement de la marche des rayons sur une cible.

NACH-
FÜHR-
REGLER

EP 0 533 036 B1